# EUROPÄISCHE PATENTSCHRIFT

(11) **EP 3 140 183 B1**
(45) Veröffentlichungstag und Bekanntmachung des Hinweises auf die Patenterteilung: **26.06.2019**
(21) Anmeldenummer: 15731506.0
(22) Anmeldetag: 30.04.2015
(51) Int. Cl.: B62M 6/45, B62M 25/08, B62M 6/55, B62M 6/50, B62M 9/132

(54) **GANGSCHALTUNG FÜR EIN FAHRRAD UND FAHRRAD MIT EINER DERARTIGEN GANGSCHALTUNG**
GEARSHIFT FOR A BICYCLE AND BICYCLE WITH SUCH A GEARSHIFT
DÉRAILLEUR POUR UN VÉLO ET VÉLO AYANT UN TEL DÉRAILLEUR

(30) Priorität: 07.05.2014 DE 102014208479
(43) Veröffentlichungstag der Anmeldung: 15.03.2017
(73) Patentinhaber: Schaeffler Technologies AG & Co. KG, 91074 Herzogenaurach (DE)
(72) Erfinder: DJAKOVIC, Boris, 90478 Nürnberg (DE); POMMEL, Vincent, 91058 Erlangen (DE); MÜNCH,Dagmar, 60327 Frankfurt (DE); HERBRICH, Matthias, 90766 Fürth (DE); RUDY, Dietmar, 66501 Kleinbundenbach (DE); HECKER, Christian, 90762 Fürth (DE)
(86) Internationale Anmeldenummer: PCT/DE2015/200293
(87) Internationale Veröffentlichungsnummer: WO 2015/169313

(56) Entgegenhaltungen:
- EP-A1- 2 562 073
- EP-A1- 2 581 299
- WO-A1-91/17078

## Beschreibung

Die Erfindung betrifft ein Fahrrad mit einem elektrischen Hilfsantrieb und einer Gangschaltung, umfassend ein als Nabenschaltung oder Kettenschaltung ausgebildetes gestuftes Getriebe und einen elektromechanischen Aktor zum Auslösen eines Gangwechsels des Getriebes, wobei der elektromechanische Aktor ein über eine Datenleitung mit einer Antriebssteuerungseinheit des elektrischen Hilfsantriebs verbindbare oder verbundene Schaltsteuerungseinheit aufweist, die dazu ausgebildet ist, den Aktor in Abhängigkeit wenigstens einer von der Antriebssteuerungseinheit an die Schaltsteuerungseinheit übertragenen Zustandsgröße oder einer daraus abgeleiteten Information zu aktivieren.

Fahrräder sind zumeist mit einer Gangschaltung ausgerüstet, deren Getriebe als Nabenschaltung oder als Kettenschaltung ausgebildet sein kann. Der Fahrer wählt die entsprechende Gangstufe mittels eines Handschalters, der z. B. als am Lenker angebrachter Drehschalter ausgebildet sein kann. Dieser Schalter ist mittels eines Seilzugs mit dem Getriebe verbunden. Neben Drehschaltern sind auch am Lenker oder an einem Rahmenbauteil angebrachte Schwenk- oder Kippschalter gebräuchlich.

Eine elektromechanische Gangschaltung für ein Fahrrad ist aus der DE 41 28 866 A1 bekannt. Diese Gangschaltung umfasst einen Bedienschalter, ein Getriebe, beispielsweise eine Getriebenabe oder eine Kettenschaltung, und eine elektromechanische Verstellvorrichtung. Die Verstellvorrichtung ist mit einem Seilzug gekoppelt, so dass durch eine Verschiebung der Verstellvorrichtung das Getriebe geschaltet werden kann.

Herkömmliche Gangschaltungen für ein Fahrrad können jederzeit geschaltet werden, insbesondere auch unter Last, das heißt wenn das vom Fahrer auf die Tretkurbeln übertragene Drehmoment maximal ist. Sowohl bei Nabenschaltungen als auch bei Kettenschaltungen tritt allerdings erhöhter Verschleiß auf, wenn sie bei hoher Belastung geschaltet werden. Dokument EP 2 562 073 A1 wird als der nächste Stand der Technik angesehen und offenbart die Präambel des Anspruchs 1.

Fahrräder mit elektrischem Hilfsantrieb sind ebenfalls von diesem Problem betroffen. Üblicherweise reduziert der Fahrer vor einem manuellen Schaltvorgang die Antriebsleistung, anschließend führt er den Schaltvorgang manuell durch, daraufhin kann er die Antriebsleistung wieder einstellen, das heißt erhöhen, wobei auch dieser Bedienvorgang manuell erfolgt. Eine ordnungsgemäße und Material schonende Bedienung einer herkömmlichen Gangschaltung für ein Fahrrad mit einem elektrischen Hilfsantrieb ist daher nicht besonders komfortabel.

Der Erfindung liegt daher die Aufgabe zugrunde, ein Fahrrad mit einer Gangschaltung anzugeben, die eine einfache Bedienung und einen Material schonenden Gangwechsel ermöglicht.

Zur Lösung dieser Aufgabe ist bei dem Fahrrad mit einem elektrischen Hilfsantrieb und mit einer Gangschaltung der eingangs genannten Art umfassend ein als Nabenschaltung oder Kettenschaltung ausgebildetes gestuftes Getriebe und einen elektromechanischen Aktor zum Auslösen eines Gangwechsels des Getriebes vorgesehen, dass der elektromechanische Aktor eine über eine Datenleitung mit einer Antriebssteuerungseinheit des elektrischen Hilfsantriebs verbindbare oder verbundene Schaltsteuerungseinheit aufweist, die dazu ausgebildet ist, den Aktor in Abhängigkeit wenigstens einer von der Antriebssteuerungseinheit an die Schaltsteuerungseinheit übertragenen Zustandsgröße oder einer daraus abgeleiteten Information zu aktivieren. Erfindungsgemäß ist der elektromechanische Aktor ein Linearaktor, der als Planetenwälzgewindetrieb oder als Kugelgewindetrieb oder als Gleitspindeltrieb ausgebildet ist, wobei der elektromechanische Aktor in einem Rahmenbauteil oder Rahmenrohr des Fahrradrahmens angeordnet ist, und wobei die Gangschaltung oder der elektromechanische Aktor einen Neigungssensor aufweist, der zum Erfassen einer Neigung in Nickrichtung und in Rollrichtung ausgebildet ist, wobei die Schaltsteuerungseinheit dazu ausgebildet ist, die erfasste Neigung beim Festlegen eines Zeitpunkts für einen Gangwechsel zu berücksichtigen.

Die Erfindung beruht auf der Erkenntnis, dass eine Kommunikation zwischen der Antriebssteuerungseinheit des elektrischen Hilfsantriebs und der Schaltsteuerungseinheit, die den elektromechanischen Aktor betätigt, erforderlich ist, um zu vermeiden, dass ein Schaltvorgang zu einem ungünstigen Zeitpunkt durchgeführt wird. Ein ungünstiger Zeitpunkt liegt beispielsweise dann vor, wenn der elektrische Hilfsantrieb mit hoher Leistung betrieben wird. Daneben ist ein Gangwechsel dann ungünstig, wenn der Fahrer des Fahrrads über die Tretkurbeln ein hohes Drehmoment aufbringt. Erfindungsgemäß ist daher vorgesehen, den Zeitpunkt eines Gangwechsels in Abhängigkeit einer Zustandsgröße festzulegen, die von der Antriebssteuerungseinheit bereitgestellt wird. Anstelle einer Zustandsgröße kann auch eine daraus abgeleitete Information verwendet werden, um den Zeitpunkt des Auslösens des elektromechanischen Aktors festzulegen.

Bei dem erfindungsgemässen Fahrrad wird es bevorzugt, dass von der Antriebssteuerungseinheit wenigstens eine Zustandsgröße der folgenden Gruppe an die Schaltsteuerungseinheit übertragbar ist: die mittels eines Tretsensors erfasste Position einer Tretkurbel, Tretkurbeldrehzahl, Fahrgeschwindigkeit, das von einem Fahrer aufgebrachte Drehmoment. Diese Zustandsgrößen werden zumindest teilweise für die Steuerung oder Regelung des elektrischen Hilfsantriebs benötigt, so dass die Erfassung dieser Zustandsgrößen ohnehin erfolgt, so dass in den meisten Fällen keine zusätzlichen Hardwarekomponenten erforderlich sind. Andererseits kann durch die erfindungsgemäß vorgesehene Übertragung wenigstens einer Zustandsgröße auf entsprechende Sensoren der Gangschaltung weitestgehend verzichtet werden.

Im Rahmen der Erfindung wird es ganz besonders bevorzugt, dass die Schaltsteuerungseinheit dazu ausgebildet ist, anhand wenigstens einer übertragenen Zustandsgröße einen Zeitpunkt zu bestimmen, an dem eine Tretkurbel einen unteren oder oberen Totpunkt passiert. Wenn sich eine Tretkurbel an ihrem oberen oder unteren Totpunkt befindet, kann der Fahrer kein oder allenfalls ein sehr geringes Drehmoment aufbringen, es ist daher günstig, einen Schaltvorgang genau in diesem Moment auszulösen. Dementsprechend wird bei der erfindungsgemäßen Gangschaltung der Aktor an diesem anhand der wenigstens einen übertragenen Zustandsgröße bestimmten Zeitpunkt aktiviert, so dass der Schaltvorgang Material schonend durchgeführt wird.

Mittels des Tretsensors kann die Position einer Tretkurbel erfasst werden, aus dieser Information kann ein Zeitpunkt errechnet werden, an dem eine Tretkurbel einen Totpunkt passiert. Alternativ oder zusätzlich kann auch die Tretkurbeldrehzahl als Zustandsgröße berücksichtigt werden, um einen günstigen Zeitpunkt für einen Schaltvorgang zu bestimmen. Dasselbe gilt für die Fahrgeschwindigkeit und/oder das von einem Fahrer auf die Tretkurbeln übertragene Drehmoment.

Im Rahmen der Erfindung kann es also vorgesehen sein, dass der Schaltvorgang zeitlich geringfügig gegenüber dem Erreichen eines Totpunkts verschoben, insbesondere vorverlegt ist. Dabei kann ein Schaltvorgang von der Schaltsteuerungseinheit dann ausgelöst werden, wenn sich eine Tretkurbel beispielsweise 20° oder 10° vor dem oberen oder unteren Totpunkt einer Tretkurbel befindet.

Zusätzlich kann es bei dem erfindungsgemässen Fahrrad vorgesehen sein, dass die Antriebssteuerungseinheit den elektrischen Hilfsantrieb zum Zeitpunkt eines Gangwechsels so steuert, dass die von dem elektrischen Hilfsantrieb erzeugte Antriebsleistung verringert oder sogar abgeschaltet wird. Dazu kann die Schaltsteuerungseinheit über die Datenleitung der Antriebssteuerungseinheit den Zeitpunkt eines bevorstehenden Gangwechsels übermitteln.

Erfindungsgemäss weist die Gangschaltung oder der Aktor einen Neigungssensor auf, der zum Erfassen der Neigung in Nickrichtung und in Rollrichtung ausgebildet ist und dass die Schaltsteuerungseinheit dazu ausgebildet ist, die erfasste Neigung beim Festlegen eines Zeitpunkts für einen Gangwechsel zu berücksichtigen. Eine Neigung in Nickrichtung entspricht einer Drehung um die Querachse des Fahrrads. Mittels der durch den Neigungssensor erfassten Neigung kann festgestellt werden, ob sich das Fahrrad auf einer Steigung oder auf einer ein Gefälle aufweisenden Strecke befindet. Die Rollrichtung gibt eine Neigung um die Längsachse des Fahrrads an, sofern ein entsprechender Wert von dem Neigungssensor erfasst worden ist, kann festgestellt werden, ob momentan eine Kurve gefahren wird. Die Information, ob das Fahrrad bergauf oder bergab fährt, wird für einen automatischen Schaltvorgang benötigt. Die eine Kurvenlage betreffende Information ist erforderlich, da die Schaltsteuerungseinheit während einer Kurvenfahrt keinen Schaltvorgang auslöst.

Das erfindungsgemässe Fahrrad kann optional auch automatisch Gangwechsel vornehmen, dazu kann sie so ausgebildet sein, dass sie einen Gang des Getriebes festlegt, in den mittels des elektromechanischen Aktors geschaltet wird.

Der bei dem erfindungsgemässen Fahrrad vorgesehene Aktor ist als Linearaktor ausgebildet, der als Planetenwälzgewindetrieb oder als Kugelgewindetrieb oder als Gleitspindeltrieb ausgebildet ist. Generell sind alle Linearaktoren geeignet, die einen elektrischen Antrieb aufweisen und sich durch einen geringen Bauraum und eine geringe Masse auszeichnen, so dass sie für den Ein- oder Anbau in oder an ein Fahrrad geeignet sind.

Es ist auch möglich, dass der Aktor des erfindungsgemässen Fahrrads einen direkten oder indirekten Lineargeber aufweist, der eine auf einem magnetischen oder induktiven oder kapazitiven oder potentiometrischen oder magnetostriktiven oder magnetoresistiven oder optischen Messprinzip beruhende Positionserfassung ermöglicht. Im Falle einer indirekten Messung wird die Position über einen Drehgeber erfasst, der die Rotation der Motorwelle misst und erfasst. Dazu kann ein Drehgeber auf einer Motorwelle des Aktors angebracht sein. Die indirekte Messung erfolgt nach dem Hall-Prinzip, optisch oder magnetoresistiv.

Bei dem erfindungsgemässen Fahrrad wird es bevorzugt, dass der elektromechanische Aktor an eine Stromquelle wie einen Akkumulator des elektrischen Hilfsantriebs angeschlossen ist. Alternativ kann der elektromechanische Aktor auch einen eigenen Energiespeicher wie einen Akku oder eine Batterie oder einen Kondensator aufweisen, von dem er mit Strom versorgt wird. Es ist auch möglich, dass der Aktor mit einem Dynamo des Fahrrads verbindbar oder verbunden ist, bei dieser Ausgestaltung erhält der Aktor die für den Betrieb erforderliche Energie von dem Dynamo.

Der Begriff "Fahrrad" umfasst sowohl sogenannte Pedelecs und E-Bikes als auch Sport- und Fitnessgeräte, die wie ein Fahrrad aufgebaut sind, oder ein Fahrrad im klassischen Sinne. Bei sämtlichen derartigen Geräten kommt es darauf an, einen Schaltvorgang lastfrei bzw. zum Zeitpunkt der geringsten Belastung durchzuführen, um Geräusche, Vibrationen und Verschleiß zu verringern

Ein Ausführungsbeispiel der Erfindung ist in den Zeichnungen dargestellt und wird im Folgenden näher beschrieben. Es zeigen:
- Figur 1: die wesentlichen Komponenten eines erfindungsgemäßen Fahrrads mit einer Gangschaltung; und
- Figur 2: eine geschnittene Ansicht eines Aktors einer Gangschaltung.

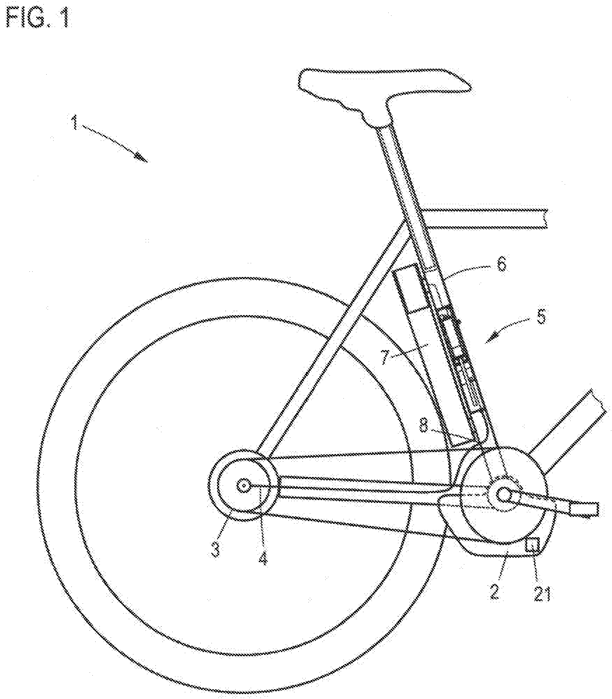

Figur 1 zeigt die wesentlichen Komponenten eines Fahrrads 1 mit einem elektrischen Hilfsantrieb 2, der im Bereich des Tretlagers angeordnet ist. Das Fahrrad 1 weist ein gestuftes Getriebe auf, das als Getriebenabe 3 ausgebildet ist. Die Getriebenabe 3 weist ein Planetengetriebe auf, das mittels eines Seilzugs 4 geschaltet wird.

Die Gangschaltung umfasst einen elektromechanischen Aktor 5, der als Stabaktor ausgebildet und im Inneren des Sattelrohrs 6 des Fahrrads 1 angeordnet ist.

Das Fahrrad 1 umfasst einen Akkumulator 7, der sowohl für den Hilfsantrieb 2 als auch für den Aktor 5 die benötigte elektrische Energie zur Verfügung stellt.

Der Seilzug 4, dessen eines Ende mit der Getriebenabe 3 verbunden ist, ist in einer Bowdenhülle geführt. Ausgehend von der Getriebenabe 3 verläuft der Seilzug 4 zunächst horizontal, im Anschluss daran passiert er zwei Umlenkstellen und mündet in den Aktor 5. Das Sattelrohr weist an einer Seite eine Bohrung 8 auf, durch die die Bowdenhülle durch das Sattelrohr 6 gelangt.

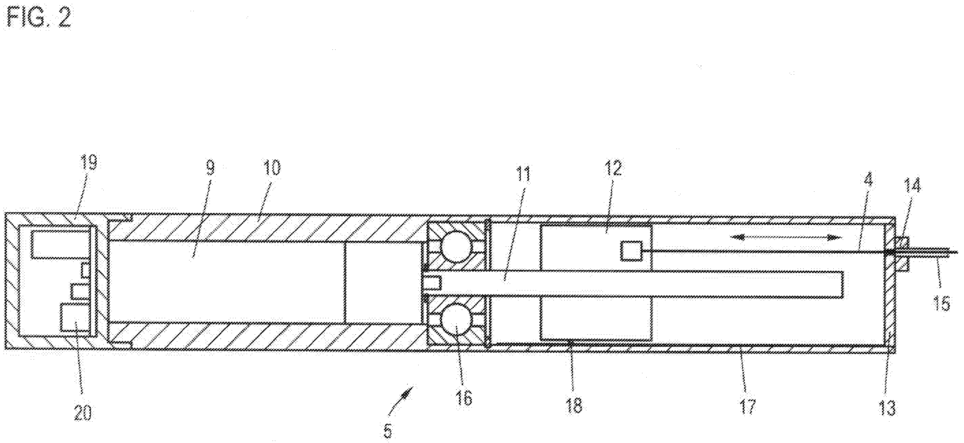

Figur 2 zeigt eine geschnittene Seitenansicht des Aktors 5. Der als linearer Stabaktor ausgebildete Aktor 5 ist vergleichsweise schmal und lang, so dass er in das in Figur 1 gezeigte Sattelrohr 6 einsetzbar ist. Grundsätzlich könnte der Aktor 5 auch in einem anderen Rahmenrohr eines Fahrradrahmens oder alternativ in einem separaten Gehäuse angeordnet sein.

Der Aktor 5 umfasst einen Elektromotor 9, der in einem Aktorgehäuse 10 angeordnet ist. Der Elektromotor 9 treibt eine Spindel 11 an, die wiederum eine Spindelmutter 12 antreibt. Die Spindel 11 ist in dem dargestellten Ausführungsbeispiel eingängig ausgebildet, daneben sind Ausführungen mit mehrgängigen Gewinderillen denkbar. Grundsätzlich kann eine Gleitspindel, eine Kugelrollspindel oder ein Planetenwälztrieb als Spindeltrieb eingesetzt werden.

An dem im eingebauten Zustand unteren Ende ist ein Deckel 13 vorgesehen, der das Aktorgehäuse 10 verschließt. Der Deckel 13 weist eine Öffnung 14 für den Seilzug 4 auf, dieser weist außerhalb des Aktorgehäuses 10 eine Bowdenhülle 15 auf, die sich im Bereich der Öffnung 14 an dem Deckel 13 abstützt.

In Figur 2 erkennt man, dass die Spindel 11 mittels eines Rillenkugellagers 16 gegenüber dem Aktorgehäuse 10 axial gelagert ist. Im Aktorgehäuse 10 ist ein Linearmaßstab 17 angebracht, mit dem die Axialposition der Spindelmutter 12 erfasst werden kann. Dazu weist die Spindelmutter 12 ein Kontaktstück 18 auf, das den als Potentiometerstreifen ausgebildeten Linearmaßstab 17 kontaktiert. Mittel des Kontaktstücks 18, das bezüglich des Linearmaßstabs 17, der als Potentiometerstreifen ausgebildet ist, bewegbar ist, kann die axiale Position der Spindelmutter 12 bezüglich des Linearmaßstabs 17 erfasst werden. Mittels des Potentiometerstreifens wird dabei ein veränderlicher Widerstandswert erfasst, der proportional zur Position der Spindelmutter 12 ist. Darüber hinaus sind auch andere physikalische Messprinzipien denkbar, auf denen ein Linearsensor basieren kann. Dazu zählen z. B. magnetoresistive, magnetorestriktive, kapazitive, induktive oder optische Messprinzipien.

An das Aktorgehäuse 10 schließt sich an dem dem Deckel 13 entgegengesetzten Ende ein weiterer Gehäuseabschnitt 19 an, in dem eine Schaltsteuerungseinheit 20 angeordnet ist. Die Schaltsteuerungseinheit 20 ermittelt einen exakten Zeitpunkt für den Schaltvorgang sowie die Schaltstufe der Getriebenabe 3 und betätigt den Aktor 5 entsprechend, so dass der Gangwechsel ausgelöst wird.

Der elektrische Hilfsantrieb 2 weist eine in Figur 1 schematisch dargestellte Antriebssteuerungseinheit 21 auf, die mit der Schaltsteuerungseinheit 20 über eine Datenleitung (nicht gezeigt) verbunden ist. Die Datenleitung ist so ausgebildet, dass sowohl von der Antriebssteuerungseinheit 21 Daten an die Schaltsteuerungseinheit 20 als auch von dieser Daten an die Antriebssteuerungseinheit 21 übertragen werden können, ein Austausch von Daten ist somit in beide Richtungen möglich.

Damit die Schaltsteuerungseinheit 20 dem exakten Zeitpunkt für einen Schaltvorgang und die passende Schaltstufe ermitteln kann, werden Zustandsgrößen als Eingangsgrößen benötigt. Die Schaltsteuerungseinheit 20 berücksichtigt die Größe des Drehmoments, das der Fahrer über die Pedale und Tretkurbeln auf die Tretlagerwelle ausübt, die Größe des Drehmoments ist allerdings eine optionale Größe, die nicht notwendigerweise benötigt wird. Die Schaltsteuerungseinheit 20 benötigt allerdings die Tretkurbeldrehzahl (Pedaldrehzahl) bzw. die Stellung eines Pedals oder einer Tretkurbel, damit der richtige Zeitpunkt zum Auslösen des Schaltvorgangs gewählt werden kann. Die Schaltsteuerungseinheit 20 ist so ausgebildet, dass sie einen Schaltvorgang dann auslöst, wenn das Drehmoment am geringsten ist. Daher erfolgt ein Schaltvorgang, wenn sich ein Pedal bzw. eine Tretkurbel am oberen Totpunkt der Drehbewegung befindet. Die Pedaldrehzahl (Tretkurbeldrehzahl) oder die Position einer Tretkurbel oder eines Pedals wird dabei aus dem zeitlichen Verlauf des Drehmoments errechnet. Das Drehmoment oder Trittmoment besitzt im Wesentlichen einen sinusförmigen Verlauf, das höchste Drehmoment wird dann erreicht, wenn sich die Pedale in horizontaler Position befinden. In diesem Zustand kann die vom Fahrer aufgebrachte Kraft näherungsweise senkrecht auf die Tretkurbel wirken, dementsprechend ist das Drehmoment in diesem Zeitpunkt maximal. Bei einer Kurbelumdrehung tritt dieses Maximum zweimal auf, die beiden Maxima sind um 180° zueinander versetzt. Zwischen den beiden Maxima existiert eine Position, in der die Tretkurbeln senkrecht stehen. In dieser Situation ist das übertragene Drehmoment minimal. Wenn ein Schaltvorgang in diesem Moment ausgelöst wird, kann der Verschleiß minimiert werden, wodurch die Lebensdauer des Getriebes erhöht wird.

Als weitere Eingangsgröße kann die Geschwindigkeit des Fahrrads berücksichtigt werden. Sowohl das momentane Drehmoment als auch die Geschwindigkeit liegen als Zustandsgrößen in der Antriebssteuerungseinheit 21 vor und werden über die Datenleitung an die Schaltsteuerungseinheit 20 übermittelt. Als weitere Eingangsgröße wird die Neigung des Fahrrads berücksichtigt. Dazu umfasst die Schaltsteuerungseinheit 20 einen Neigungssensor, der zumindest die Neigung in Nickrichtung als auch in Rollrichtung erfasst. Anhand des ermittelten Werts für die Nickrichtung kann festgestellt werden, ob das Fahrrad bergauf oder bergab fährt. Anhand des ermittelten Werts für die Rollrichtung kann festgestellt werden, ob sich das Fahrrad in Kurvenlage befindet, das heißt ob momentan eine Kurve gefahren wird. Falls die Schaltsteuerungseinheit 20 feststellt, dass eine Kurvenfahrt stattfindet, erfolgt kein Schaltvorgang, bis die Kurvenfahrt beendet ist. Die Information, ob das Fahrrad bergauf oder bergab fährt, kann zum Ermitteln einer passenden Schaltstufe verwendet werden.

Wenn an die Schaltsteuerungseinheit 20 das vom Fahrer aufgebrachte Drehmoment und die Geschwindigkeit von der Antriebssteuerungseinheit 21 übermittelt werden, kann die zusätzlich benötigte Pedalstellung oder Tretkurbelstellung von der Schaltsteuerungseinheit 20 berechnet werden. Ebenso ist eine Berechnung durch den Aktor 5 möglich. Eine gegebenenfalls vorhandene Neigung des Fahrrads 1 wird mittels des in die Schaltsteuerungseinheit 20 integrierten Neigungssensors erfasst. Aus diesen Eingangsgrößen werden ein Schaltzeitpunkt und ein optimaler Gang (Gangstufe) errechnet. Die Schaltsteuerungseinheit 20 steuert den Aktor 5 so an, dass dieser exakt zum benötigten Zeitpunkt den Schaltvorgang durch Bewegen des Seilzugs 4 auslöst.

Über die Datenleitung übermittelt die Schaltsteuerungseinheit 20 ein Signal an die Antriebssteuerungseinheit 21 des Hilfsantriebs 2, so dass dieser die Antriebsleistung während eines Schaltvorgangs verringert oder sogar aussetzt, um einen Verschleiß der Getriebenabe 3 zu verhindern oder zu minimieren.

Bei einer alternativen Bestimmung des Schaltzeitpunkts erhält die Schaltsteuerungseinheit 20 die Pedaldrehzahl und die Geschwindigkeit des Fahrrads von der Antriebssteuerungseinheit 21. Aus der Pedaldrehzahl kann die Stellung des Pedals ermittelt werden. Aus diesen von der Antriebssteuerungseinheit 21 an die Schaltsteuerungseinheit 20 übertragenen Informationen, das heißt aus der Pedaldrehzahl und der Pedalstellung sowie aus der Geschwindigkeit des Fahrrads berechnet die Schaltsteuerungseinheit 20 einen günstigen Schaltzeitpunkt, wenn eine Tretkurbel sich an ihrem Totpunkt befindet und steuert den Aktor 5 entsprechend an. Daneben wird ein optimaler Gang errechnet, so dass der gewünschte Schaltvorgang ausgeführt werden kann.

Auch bei dieser Variante erhält die Antriebssteuerungseinheit 21 ein Signal von der Schaltsteuerungseinheit 20, so dass die Antriebsleistung des elektrischen Hilfsantriebs 2 während eines Schaltvorgangs reduziert oder ausgeschaltet wird.

### Bezuaszeichenliste

1 Fahrrad
2 Hilfsantrieb
3 Getriebenabe
4 Seilzug
5 Aktor
6 Sattelrohr
7 Akkumulator
8 Bohrung
9 Elektromotor
10 Aktorgehäuse
11 Spindel
12 Spindelmutter
13 Deckel
14 Öffnung
15 Bowdenhülle
16 Rillenkugellager
17 Linearmaßstab
18 Kontaktstück
19 Gehäuseabschnitt
20 Schaltsteuerungseinheit
21 Antriebssteuerungseinheit

## Patentansprüche

1. Fahrrad (1) mit einem Fahrradrahmen, einem elektrischen Hilfsantrieb (2) und einer Gangschaltung, umfassend ein als Nabenschaltung oder Kettenschaltung ausgebildetes gestuftes Getriebe und einen elektromechanischen Aktor (5) zum Auslösen eines Gangwechsels des Getriebes, wobei der elektromechanische Aktor (5) eine über eine Datenleitung mit einer Antriebssteuerungseinheit (21) des elektrischen Hilfsantriebs (2) verbindbare oder verbundene Schaltsteuerungseinheit (20) aufweist, die dazu ausgebildet ist, den Aktor (5) in Abhängigkeit wenigstens einer von der Antriebssteuerungseinheit (21) an die Schaltsteuerungseinheit (20) übertragenen Zustandsgröße oder einer daraus abgeleiteten Information zu aktivieren, **dadurch gekennzeichnet, dass** der elektromechanische Aktor (5) ein Linearaktor ist, der als Planetenwälzgewindetrieb oder als Kugelgewindetrieb oder als Gleitspindeltrieb ausgebildet ist, wobei der elektromechanische Aktor (5) in einem Rahmenbauteil oder Rahmenrohr des Fahrradrahmens angeordnet ist, und wobei die Gangschaltung oder der elektromechanische Aktor (5) einen Neigungssensor aufweist, der zum Erfassen einer Neigung in Nickrichtung und in Rollrichtung ausgebildet ist, wobei die Schaltsteuerungseinheit (20) dazu ausgebildet ist, die erfasste Neigung beim Festlegen eines Zeitpunkts für einen Gangwechsel zu berücksichtigen.

2. Fahrrad nach Anspruch 1, **dadurch gekennzeichnet, dass** von der Antriebssteuerungseinheit (21) wenigstens eine Zustandsgröße der folgenden Gruppe an die Schaltsteuerungseinheit (20) übertragbar ist: die mittels eines Tretsensors erfasste Position einer Tretkurbel, Tretkurbeldrehzahl, Fahrgeschwindigkeit, das von einem Fahrer aufgebrachte Drehmoment.

3. Fahrrad nach Anspruch 2, wobei die Schaltsteuerungseinheit (20) dazu ausgebildet ist, anhand wenigstens einer übertragenen Zustandsgröße einen Zeitpunkt zu bestimmen, an dem eine Tretkurbel einen unteren oder oberen Totpunkt passiert und wobei die Schaltsteuerungseinheit (20) den elektromechanischen Aktor (5) vor oder zu diesem Zeitpunkt aktiviert.

4. Fahrrad nach Anspruch 3, wobei die Schaltsteuerungseinheit (20) dazu ausgebildet ist, den Schaltvorgang in Abhängigkeit der Trittfrequenz und unter Berücksichtigung des notwendigen Schalthubs des Getriebes dann auszulösen, wenn sich eine Tretkurbel vor dem unteren oder oberen Totpunkt befindet.

5. Fahrrad nach einem der vorangehenden Ansprüche, wobei die Schaltsteuerungseinheit (20) dazu ausgebildet ist, einen Gang des Getriebes festzulegen, in den mittels des elektromechanischen Aktors (5) geschaltet wird.

6. Fahrrad nach einem der vorangehenden Ansprüche, wobei der elektromechanische Aktor (5) in einem als Sattelrohr (6) ausgebildeten Rahmenrohr des Fahrradrahmens angeordnet ist.

7. Fahrrad nach einem der vorangehenden Ansprüche, wobei der elektromechanische Aktor (5) einen direkten oder indirekten Lineargeber aufweist, der eine auf einem magnetischen oder induktiven oder kapazitiven oder potentiometrischen oder magnetostriktiven oder magnetoresistiven Messprinzip beruhende Positionserfassung ermöglicht.

8. Fahrrad nach Anspruch 6, wobei der indirekte Lineargeber dazu ausgebildet ist, eine Schaltposition mittels eines auf einer Motorwelle des elektromechanischen Aktors (5) angebrachten Drehgebers zu messen, wobei die indirekte Messung nach dem Hall-Prinzip, optisch oder magnetoresistiv erfolgt.

9. Fahrrad nach einem der Ansprüche 1 bis 8, wobei der elektromechanische Aktor (5) an eine Stromquelle angeschlossen ist.

10. Fahrrad nach Anspruch 9, wobei der elektromechanische Aktor (5) an einen die Stromquelle bildenden Akkumulator des elektrischen Hilfsantriebs (2) angeschlossen ist.

## Claims

1. Bicycle (1) having a bicycle frame, an electric auxiliary drive (2) and a gearshift comprising a stepped transmission which is embodied as a hub gear system or derailleur system, and an electromechanical actuator (5) for triggering a gear change of the transmission, wherein the electromechanical actuator (5) has a shift control unit (20) which can be connected or is connected via a data line to a drive control unit (21) of the electric auxiliary drive (2) and is designed to activate the actuator (5) as a function of at least one state variable transmitted to the shift control unit (20) by the drive control unit (21), or an information item derived therefrom, **characterized in that** the electromechanical actuator (5) is a linear actuator which is embodied as a planetary roller screw drive or as a ball screw drive or as a sliding spindle drive, wherein the electromechanical actuator (5) is arranged in a frame component or frame tube of the bicycle frame, and wherein the gearshift or the electromechanical actuator (5) has an inclination sensor which is designed to sense an inclination in the pitching direction and in the rolling direction wherein the shift control unit (20) is designed to take into account the sensed inclination when defining a time for a gear change.

2. Bicycle according to Claim 1, **characterized in that** the drive control unit (21) can transmit at least one state variable of the following group to the shift control unit (20): the position, sensed by means of a pedal sensor, of a pedal crank, pedal crank rotational speed, velocity or torque which is applied by a rider.

3. Bicycle according to Claim 2, wherein the shift control unit (20) is designed to determine, on the basis of at least one transmitted state variable, a point in time at which a pedal crank has passed a bottom or top dead centre, and wherein the shift control unit (20) activates the electromechanical actuator (5) before or at this point in time.

4. Bicycle according to Claim 3, wherein the shift control unit (20) is designed to trigger the shift process as a function of the pedalling frequency and taking into account the necessary shift travel of the transmission when a pedal crank is located before the bottom or top dead centre.

5. Bicycle according to one of the preceding claims, wherein the shift control unit (20) is designed to define a gearspeed of the transmission into which shifting occurs by means of the electromechanical actuator (5).

6. Bicycle according to one of the preceding claims, wherein the electromechanical actuator (5) is arranged in a frame tube, embodied as a saddle tube (6), of the bicycle frame.

7. Bicycle according to one of the preceding claims, wherein the electromechanical actuator (5) has a direct or indirect linear encoder which permits sensing of a position on the basis of a magnetic or inductive or capacitive or potentiometric or magnetostrictive or magnetoresistive measuring principle.

8. Bicycle according to Claim 6, wherein the indirect linear encoder is designed to measure a shift position by means of a rotary encoder which is mounted on a motor shaft of the electromechanical actuator (5), wherein the indirect measurement is carried out according to the Hall principle, in an optical or a magnetoresistive fashion.

9. Bicycle according to one of Claims 1 to 8, wherein the electromechanical actuator (5) is connected to a power source.

10. Bicycle according to Claim 9, wherein the electromechanical actuator (5) is connected to an accumulator, forming the power source, of the electric auxiliary drive (2).

## Revendications

1. Bicyclette (1) comprenant un cadre de bicyclette, un entraînement auxiliaire électrique (2) et un moyen de changement de vitesse comprenant un train d'engrenages étagé conçu comme un moyeu à vitesses intégrées ou comme un dérailleur et un actionneur électromécanique (5) destiné à déclencher un changement de vitesse du train d'engrenages, l'actionneur électromécanique (5) comportant une unité de commande de changement de vitesse (20) qui est reliée ou peut être reliée par une ligne de données à une unité de commande d'entraînement (21) de l'entraînement auxiliaire électrique (2) et qui est conçue pour activer l'actionneur (5) en fonction d'une grandeur d'état, ou d'une information qui en découle, transmise à l'unité de commande de changement de vitesse (20) par l'unité de commande d'entraînement (21), **caractérisée en ce que** l'actionneur électromécanique (5) est un actionneur linéaire qui est conçu sous la forme d'une vis d'entraînement à rouleaux planétaires ou sous la forme d'une vis d'entraînement à billes ou d'un entraînement à broche lisse, l'actionneur électromécanique (5) étant disposé dans un élément ou un tube du cadre de bicyclette et le moyen de changement de vitesse ou l'actionneur électromécanique (5) comportant un capteur d'inclinaison qui est conçu pour détecter une inclinaison dans la direction de tangage et dans la direction de roulis, l'unité de commande de changement de vitesse (20) étant conçue pour prendre en compte l'inclinaison détectée lors du réglage de l'instant d'un changement de vitesse.

2. Bicyclette selon la revendication 1, **caractérisée en ce que** l'unité de commande d'entraînement (21) peut transmettre au moins une grandeur d'état du groupe suivant à l'unité de commande de changement de vitesse (20) : la position détectée par un capteur de pédale d'un pédalier, la vitesse de rotation du pédalier, la vitesse de roulement, le couple appliqué par un cycliste.

3. Bicyclette selon la revendication 2, l'unité de commande de changement de vitesse (20) étant adaptée pour déterminer, sur la base d'au moins une grandeur d'état transmise, un instant auquel un pédalier passe par un point mort bas ou haut et l'unité de commande de changement de vitesse (20) activant l'actionneur électromécanique (5) avant cet instant ou à cet instant.

4. Bicyclette selon la revendication 3, l'unité de commande de changement de vitesse (20) étant conçue pour déclencher le processus de changement de vitesse en fonction de la fréquence de pédalage et en prenant en compte la course de changement de vitesse nécessaire du train d'engrenages seulement lorsque le pédalier se trouve avant le point mort bas ou haut.

5. Bicyclette selon l'une des revendications précédentes, l'unité de commande de changement de vitesse (20) étant conçue pour définir une vitesse du train d'engrenage à laquelle l'actionneur électromécanique (5) est commuté.

6. Bicyclette selon l'une des revendications précédentes, l'actionneur électromécanique (5) étant disposé dans un tube, conçu comme une potence (6), du cadre de bicyclette.

7. Bicyclette selon l'une des revendications précédentes, l'actionneur électromécanique (5) comprenant un codeur linéaire direct ou indirect qui permet une détection de position reposant sur le principe de mesure inductif ou capacitif ou potentiométrique ou magnétostrictif ou magnétorésistif.

8. Bicyclette selon la revendication 6, le codeur linéaire indirect étant conçu pour mesurer une position de changement de vitesse au moyen d'un codeur monté sur un arbre moteur de l'actionneur électromécanique (5), la mesure indirecte étant effectuée selon le principe de Hall, de manière optique ou de manière magnétorésistive.

9. Bicyclette selon l'une des revendications 1 à 8, l'actionneur électromécanique (5) étant relié à une source d'alimentation.

10. Bicyclette selon la revendication 9, l'actionneur électromécanique (5) étant relié à un accumulateur, formant la source d'énergie, de l'entraînement auxiliaire électrique (2).
